# EUROPÄISCHE PATENTSCHRIFT

(11) **EP 1 490 606 B1**
(45) Veröffentlichungstag und Bekanntmachung des Hinweises auf die Patenterteilung: **06.09.2006**
(21) Anmeldenummer: 03708112.2
(22) Anmeldetag: 19.02.2003
(51) Int. Cl.: F16D 69/02, C22C 29/06, C22C 32/00

(54) **METALL-KERAMIK-VERBUNDWERKSTOFFE FÜR TRIBOLOGISCHE ANWENDUNGEN SOWIE DEFINIERTE GLEIT-/REIBPAARUNGEN AUF DER GRUNDLAGE DIESER WERKSTOFFE**
METAL-CERAMIC COMPOSITES FOR TRIBOLOGICAL USES AND DEFINED SLIDING/FRICTION PAIRS BASED ON SAID MATERIALS
MATERIAUX COMPOSITES METAL-CERAMIQUE POUR UTILISATIONS TRIBOLOGIQUES ET ACCOUPLEMENTS DU TYPE A GLISSEMENT/FRICTION DETERMINES A BASE DE CES MATERIAUX

(30) Priorität: 05.03.2002 DE 10209476; 14.02.2003 DE 10306096
(43) Veröffentlichungstag der Anmeldung: 29.12.2004
(73) Patentinhaber: CeramTec AG, 73207 Plochingen (DE)
(72) Erfinder: MEIER, Gerd, 91227 Leinburg (DE); LENKE, Ilka, 73207 Plochingen (DE)
(74) Vertreter: Uppena, Franz
(86) Internationale Anmeldenummer: PCT/EP2003/001658
(87) Internationale Veröffentlichungsnummer: WO 2003/074898

(56) Entgegenhaltungen:
- WO-A-99/11448
- DE-A- 10 045 049
- FR-A- 2 805 583
- GB-A- 1 415 507
- US-A- 5 620 791

## Beschreibung

Die Erfindung betrifft Metall-Keramik-Verbundwerkstoffe für Reib-/Gleit-Anwendungen, bei denen zur Gewährleistung oder Verbesserung der Funktion die eingesetzten Werkstoffe/Verkstoffkombinationen eine hohe Wärmeleitfähigkeit aufweisen und/oder geringe Reibungswärme erzeugen und/oder zu geringer Haftreibung neigen sowie definierte Gleit-/Reibpaarungen auf der Grundlage dieser Werkstoffe

Sowohl bei Gleit- als auch bei Reibpaarungen muss die entstehende Reibwärme zügig aus dem Reib-/Gleitbereich abgeführt werden. Das ist erforderlich, um einen Schinierfilm aufrecht zu erhalten oder konstante Reibwerte zu gewährleisten. Bei Gleitpaarungen, speziell im Mischreibungsbereich oder bei Trockenlauf, werden nach dem Stand der Technik Gleitpaarungen auf der Basis von Siliziumcarbid gegen Kohle eingesetzt, wie beispielsweise in W. Tietze, Handbuch Dichtungspraxis, 2. Auflage, Vulkan-Verlag, 2000, beschrieben wird.

Die niedrige Wärmeleitfähigkeit der Kohle, beispielsweise 8 bis 17 W/mK entsprechend den Werkstoffkennwerten der Firma Schunk Kohlenstofftechnik GmbH, Technologien in Kohlenstoff, Geschäftsbereich 1, Lager- und Dichtungstechnik, Werkstoffkennwerte, Standardwerkstoffe, Schunk, 30.14 (1997), können zu einer merklichen Temperaturerhöhung im Spalt führen. Eine solche Temperaturerhöhung führt zu einer thermischen Belastung des Bindersystems und der Imprägnierung, die Veränderungen der Werkstoffe hervorrufen kann, die wiederum zu ungünstigen Gleitbedingüngen führen. Die Beeinträchtigungen der tribologischen Eigenschaften können trotz der sehr guten Wärmeleitfähigkeit des Siliziumcarbids von beispielsweise 80 bis 130 W/mK auftreten.

Temperaturerhöhungen der Gleitpartner haben Einfluss auf die jeweilige Flüssigkeit im Spalt und führen zu veränderten Reib-/Gleit-Bedingungen. Lösungsprodukte können aufgrund der Temperaturveränderung auskristallisieren, was nach dem Stillstand zu einem erhöhten Losbrech-/Aniautmoment und im ungünstigsten Fall zum Verkleben der Gleitpaarung führt.

Dies kann sowohl bei rotierenden als auch bei sich transtatorisch bewegenden Dichtelementen auftreten.

Niedrige mechanische Werte wie Zugfestigkeit, Biegefestigkeit und Härte eines Gleitpartners, beispielsweise Kohle mit 30 bis 80 MPa, begrenzen zusätzlich den Einsatzbereich oben genannter Dichtelemente. Füllstoffe, insbesondere lmprägnierungen, können partiell angegriffen werden. Chemisch aggressive Medien verursachen ein Quellen der lmprägnierungen und verändern dadurch die tribologischen Bedingungen. Dies ist eine weitere Ursache, die zu einer Temperaturerhöhung im Spalt führen kann.

Temperatur und Druck verändern die Geometrie und somit den ursprünglichen Auslegungszustand einer Gteitpaarung, was in der Regel zu einer Verschlechterung der Funktion führt

In dem britischen Patent 1415507 wird eine Dichtung für Motoren und Kompressoren beschrieben, wobei der Werkstoff aus einem in einer Plasmaflamme erschmolzenen Gemisch von Aluminiumpulver und Tonerdepulver beteht, das auf eine rotierende Fläche gespritzt wird. Dadurch wird eine spezielle Werkstoffstruktur in Form von Platelets erzeugt Nach anschließender Zerkleinerung des erstarrten Werkstoffs wird aus dem Pulver ein Sinterkörper heißgepresst.

Aus dem US-Patent 5,620,791 ist die Herstellung von Bremsscheiben aus einem MMC-Werkstoff bekannt In einem ersten Schritt diffundiert schmelzendes Aluminium als Matrix-Metall in einen Füllwerkstoff, beispielsweise Siliciumcarbid oder Aluminiumoxid, und erstant In einem zweiten Schritt wird dieser MMC-Werkstoff wieder auigeschmvizen und in einer Schmelze eines zweiten Matrix-Werkstoffs dispergiert, wobei dieser Werkstoff einen Korarnikwerkstoff, einen CMC-Werkstoff und ein Metall enthält.

Aus der PCT -Schrift WO 99/11448 ist es bekannt, Formkörper im Schleudergussverfahren herzustellen, wobei zur Verstärkung des Werkstoffs, beispielsweise in eine Schmelze aus Aluminium, Partikel, Platelets Whisker oder kurze Fasern aus einem Haristoff, beispielsweise Siliciumcarbid, Borcarbid, Titancarbid, Siliciumnitrid, Tonerde, Graphit oder Kompositionen dieser Stoffe gegeben werden. Durch die Zentrifugalkraft ergibt sich eine von der Masse der Teilchen abhängige Verteilung der Teilchen in der Schmelze und anschließend im erstarrten Körper in Form eines Gradienten.

Aufgabe der vorliegenden Erfindung ist die Schaffung eines günstigen Reib-/Gleit-Systems, welches den folgenden Anforderungen gerecht wird: konstante Reib-/Gleit-Eigenschaften, hohe Wärmeleitfähigkeit, Formstabilität durch hohen E-Modul und hohe Festigkeit.

Die Lösung dieser Aufgabe erfolgt durch eine Auswahl bestimmter Werkstoffe und Werkstoffpaarungen und ist Gegenstand des unabhängigen Ansprüche 1, 3, 4. Bevorzugte Ausführungsformen sind Gegenstand der abhängigen Ansprüche 2, 5-14.

Zu den erfindungsgemäßen Werkstoffen mit den geforderten Eigenschaften gehören Metall-Keramik-Verbundwerkstoffe, MKV-Werkstoffe, die aus einer oder mehreren metallischen Phasen mit einem Anteil von 30 bis 75 Vol.-% bestehen und einer oder mehreren nichtmetallischen anorganischen Komponenten mit einem Anteil von 25 bis 70 Vol.- %. Als metallische Phasen werden Aluminium und seine Legierungen bevorzugt. Die nichtmetallischen keramischen Komponenten sind keramische Werkstoffe, bevorzugt Siliciumcarbide, Aluminiumoxide, Titanoxide und Silicate.

Einer der bevorzugten MKV-Werkstoffe auf der Basis von Al₂O₃ und Al hat eine Zusammensetzung von 40 bis 60 Vol.-% Al₂O₃ und 60 bis 40 Vol.-% Al mit einer Wärmeleitfähigkeit von > 50 W/mK, einer Biegefestigkeit von beispielsweise 300 MPa sowie einen E-Modul von beispielsweise 160 GPa.

Ein weiterer bevorzugter MKV-Werkstoffe auf der Basis von SiC und Al hat eine Zusammensetzung von 60 bis 80 Vol.-% SiC und 40 bis 20 Vol.-% Al mit einer Wärmeleitfähigkeit von beispielsweise 180 W/mK, einer Biegefestigkeit von beispielsweise 300 MPa sowie einen E-Modul von beispielsweise 200 GPa.

Metall-Keramik-Verbundwerkstoffe mit einem Metallanteil von größer 50 Vol.% werden Metal-Matrix-Composite (MMC) genannt. Liegt der Keramikanteil über 50 Vol.-%, wird der Werkstoff Ceramic-Matrix-Composite (CMC) genannt.

An den bearbeiteten Funktionsflächen werden Oberflächengüten mit Ra-Werten kleiner 1 µm erzielt. Durch angepasste Hartbearbeitungsverfahren können diese jedoch variiert und somit je nach Tribopartner optimiert werden.

Durch die Werkstoffwahl bei MKV-Werkstoffen und die Oberflächengüte wird bei den Reib-/Gleit-Anwendungen die Wärmeentwicklung reduziert. Zusätzlich wird durch die hohe Wärmeleitfähigkeit der Werkstoffe die im Dichtspalt entstehende Wärme zügig an die Umgebung abgegeben. Die Dichtspalttemperatur wird dadurch gesenkt und die Vercrackung, die Auskristallisation und Belagbildung im Dichtspalt, wesentlich reduziert. Das Ergebnis sind günstigere und konstantere Reibungszahlen und Verschleißwerte.

Die verbesserte Formbeständigkeit verringert außerdem die Möglichkeit des Kantenlaufs. Dies reduziert die Temperaturspitzen und führt zu stabileren Flüssigkeitsfilmen im Dichtspalt, was wiederum die Reibleistung und Wärmeentwicklung reduziert.

In sogenannten hart/weich Paarungen führt die Substitution des weicheren Partners, beispielsweise Kohle oder Kunststoff, durch einen Keramik- oder einen Verbundwerkstoff zu verbesserten mechanischen Eigenschaften des gesamten Systems und erweitert dadurch die Einsatzmöglichkeiten. Weiterhin werden die tribologischen Bedingungen dadurch verbessert, dass Reibpartner, die zum Quellen neigen und/oder die sich gegenüber chemischen Angriffen kritisch verhalten, vermieden werden. Die Auslegung der Paarung kann somit mit engeren Toleranzengrenzen als bei bisherigen Werkstoffen erfolgen.

Bei sogenannten hart/hart Paarungen werden durch den Einsatz von MKV-Werkstoffen der Trockenlauf bzw. die Notlaufeigenschaften der tribologischen Paarungen verbessert.

Durch die Reduzierung des Verschleißes erhöht sich die Lebensdauer der Reibpaarungen und verlängem sich die Wartungsintervalle.

Bei der Anwendung der erfindungsgemäßen Werkstoffe und Werkstoffpaarungen ergeben sich entscheidende Verbesserungen im industriellen Bereich, insbesondere in der Automobil- und Konsumgüterindustrie.

Allgemein können die tribologischen Eigenschaften der Paarungen über ein gezieltes Design des Werkstoffs, durch eine ausgewählte Kombination von Keramik und Metall im Durchdringungsgefüge, für die nachfolgend beispielhaft aufgeführten Anwendungen angepasst werden.

Gleitringdichtungen in Kühlwasserpumpen, insbesondere MKV/Kohle; MKV/Al₂O₃, MKV/SSiC, MKVIMKV, MKV/HM (Hartmetall), MKV2TA (Al₂O₃ + ZrO₂).

Gleitringdichtungen in Geschirrspülmaschinen, insbesondere MKV/Kohle, MKV/Al₂O₃, MKV/SSiC, MKV/MKV, MKV/HM. MKV/Kunststoff, gegebenenfalls faserverstärkt.

Gleitringdichtungen in Pumpen für Benzindirekteinspritzungen, insbesondere MKV/Kohle, MKV/SSiC, MKV/Al₂O₃, MKV/MKV, MKV/HM, MKV/ZTA.

Gleitringdichtungen in CO2-Kompressoren, insbesondere MKV/SSiC, MKV/Al₂O₃, MKV/MKV, MKV/HM, MKV/ZTA.

Definierte Gleit-/Reibpaarungen zwischen Brems-, Lager-, Dicht- oder Antriebselementen, beispielsweise in Aufzügen, Rolltreppen, Krane, Trockenkupplungen, in Pumpen und Verdichtern bei Kolben und Zylindern, Taumelscheiben, Radiallagern oder Axiallagern, bei Lagern von Mahlzylindem und bei Gleitpartnem für Wellendichtringe.

Durch gezielte Auswahl der Werkstoffe der Reibpartner für den jeweiligen Anwendungsfall ergeben sich neue Anwendungsfelder, speziell in schmierstofffreien Einsatzgebieten wie z. B. in der Pharma- und Kosmetikindustrie oder in der Lebensmitteltechnik.

Insbesondere dort, wo sich nach Stillstandszeiten das Problem der Verklebung oder Ablagerung im Dichtspalt mit hohen Losbrechmomenten auftritt, empfehlen sich die erfindungsgemäßen Werkstoffe als Reibpartner, beispielsweise als Dichtscheiben für Espresso-, Sanitär- und Industriearmaturen oder für Absperrventile.

Weitere Anwendungsfälle sind Seitenplatten in Benzin- oder Lenkhilfspumpen. Bei diesen wird neben Verschleißbeständigkeit insbesondere eine hohe Maßhaltigkeit gefordert, was aufgrund der niedrigen Schwindung der Bauteile gewährleistet wird. Dadurch steigt der Wirkungsgrad der Pumpen, wodurch der Einsatz kleinerer, kompakterer und leichterer Ausführungen möglich wird.

Möglicher Einsatz als Rollen und/oder Lagerelemente, z.B. in Verbrennungsmotoren, Verdichtem oder bei Abgasklappen.

Der Einsatz in hochbeanspruchten Ventiltrieben, wie sie bei Dieselmotoren vorhanden sind, stellen eine Alternative zu heutigen aufwendigen Lösungen dar.

In der Regel werden Gleitelemente speziell nach Kundenzeichnungen und Kundenspezifikationen erstellt. Typische Abmessungen für Großseriengleitringe sind: Außendurchmesser: 18 bis 28 mm, Innendurchmesser: 8 bis 20 mm und Höhe: 2 bis 5 mm.

## Patentansprüche

1. Metall-Keramik-Verbundvverkstoffe für Reib-/Gleitanwendungen, **gekennzeichnet durch** die Basiszusammensetzungen aus einer oder mehreren metallischen Phasen mit einem Anteil von 30 bis 75 Vol.-%, bevorzugt Aluminium und seine Legierungen, und einer oder mehreren nichtmetallischen anorganischen Komponenten mit einem Anteil von 25 bis 70 Vol.-% als keramische Werkstoffe, bevorzugt Titanoxide, Silicate oder Aluminiumoxide mit einer Zusammensetzung von 40 bis 60 Vol.-% Al₂O₃, mit einer Wärmeleitfähigkeit größer als 50 W/mK, einer Biegefestigkeit von etwa 300 MPa und einem Elastizitätsmodul von etwa 160 GPa oder mit einer Zusammensetzung von 60 bis 75 Vol.-% SiC, mit einer Wärmeleitfähigkeit von mindestens 180 W/mK, einer Biegefestigkeit von etwa 300 MPa und einem Elastizitätsmodul von etwa 200 GPa.

2. Metall-Keramik-Verbundwerkstoffe nach Anpruch 1 **dadurch gekennzeichnet, dass** die mit einem Reib-/Gleitpartner in Kontakt stehenden Oberflächen einen Ra-Wert kleiner 1 µm aufweisen.

3. Gleitring, hergestellt aus einem der Metall-Keramik-Verbundwerkstoffe nach einem der Ansprüche 1 oder 2.

4. Gleit-/Reibpaarungen auf der Grundlage der Metall-Keramik-Verbundwerkstoffe nach einem der Ansprüche 1 oder 2 oder eines Gleitrings nach Anspruch 3, **dadurch gekennzeichnet, dass** folgende Paarungen aus einem Partner aus Metall-Keramik-Verbundwerkstoff (MKV) und einem Partner aus MKV oder Kohle oder Al₂O₃ oder SSiC oder Hartmetall (HM) oder ZTA (Al₂O₃ und ZrO₂) oder Kunststoffe, gegebenenfalls faserverstärkt; vorliegen.

5. Gleit-/Reibpaarungen als Gleitringdichtung in Kühlwasserpumpen nach Anspruch 4, **dadurch gekennzeichnet, dass** folgende Werkstoffpaarungen vorliegen: MKV/Kohle, MKV/Al₂O₃, MKV/SSiC, MKV/MKV, MKV/HM (Hartmetall), MKV/ZTA (Al₂O₃ + ZrO₂),

6. Gleit-/Reibpaarungen als Gleitringdichtung in Geschirrspülmaschinen nach Anspruch 4, **dadurch gekennzeichnet, dass** folgende Werkstoffpaarungen vorliegen: MKV/Kohle, MKV/Al₂O₃, MKV/SSiC, MKV/MKV, MKV/HM. MKV/Kunststoff, gegebenenfalls faserverstärkt.

7. Gleit-/Reibpaarungen als Gleitringdichtung für Benzindirekieinspritzungen nach Anspruch 4, **dadurch gekennzeichnet, dass** folgende Werkstoffpaarungen vorliegen: MKV/Kohle, MKV/SSiC; MKV/Al₂O₃, MKV/MKV, MKV/HM, MKV/ZTA.

8. Gleit-/Reibpaarungen als Gleitringdichtung in CO₂-Kompressoren nach Anspruch 4, **dadurch gekennzeichnet, dass** folgende Werkstoffpaarungen vorliegen: MKV/SSiC, MKV/Al₂O₃, MKV/MKV, MKV/HM, MKV/ZTA.

9. Gleit-/Reibpaarungen auf der Grundlage der Metall-Keramik-Verbundwerkstoffe nach einem der Ansprüche 1 oder 2 zwischen Brems-, Lager-, Dicht- oder Antriebselementen, beispielsweise in Aufzügen, Rolltreppen, Krane, Trockenkupplungen, in Pumpen und Verdichtem bei Kolben und Zylindem, Taumelscheiben, Radiallagern oder Axiallagern, bei Lagern von Mahlzylindern und bei Gleitpartnern für Wellendichtringe.

10. Gleit-/Reibpaarungen auf der Grundlage der Metall-Keramik-Verbundwerkstoffe nach einem der Ansprüche 1 oder 2 in schmierstofffreien Einsatzgebieten wie in der Pharma- und Kosmetikindustrie oder in der Lebensmitteltechnik.

11. Gleit-/Reibpaarungen auf der Grundlage der Metall-Keramik-Verbundwerkstoffe nach einem der Ansprüche 1 oder 2 in Armaturen des Sanitärbereichs oder der Industrie.

12. Gleit-/Reibpaarungen auf der Grundlage der Metall-Keramik-Verbundwerkstoffe nach einem der Ansprüche 1 oder 2 bei Seitenplatten in Benzin- oder Lenkhilfspumpen.

13. Gleit-/Reibpaarungen auf der Grundlage der Metan-Keramik-Verbundwerkstoffe nach einem der Ansprüche 1 oder 2 bei Rollen und/oder Lageretementen in Verbrennungsmotoren, Verdichtem oder bei Abgasklappen.

14. Gleit-/Reibpaarungen auf der Grundlage der Metall-Keramik-Verbundwerkstoffe nach einem der Ansprüche 1 oder 2 bei Ventiltrieben in Dieselmotoren.

## Claims

1. Metal-ceramic composites for sliding friction applications, **characterized in that** the base compositions consist of one or more metallic phases in a proportion of 30 to 75 vol.%, preferably aluminium and its alloys, and one or more non-metallic inorganic components in a proportion of 25 to 70 vol.% as ceramic materials, preferably titanium oxides, silicates or aluminium oxides, containing 40 to 60 vol.% of Al₂O₃ and having a thermal conductivity greater than 50 W/mK, a flexural strength of about 300 MPa and a modulus of elasticity of about 160 GPa, or containing 60 to 75 vol.% of SiC and having a thermal conductivity of at least 180 W/mK, a flexural strength of about 300 MPa and a modulus of elasticity of about 200 GPa.

2. Metal-ceramic composites according to Claim 1, **characterized in that** the surfaces in contact with a sliding friction partner have an Ra value below 1 µm.

3. Sliding ring made of one of the metal-ceramic composites according to Claim 1 or 2.

4. Sliding friction pairings based on the metal-ceramic composites according to Claim 1 or 2 or on a sliding ring according to Claim 3, **characterized by** the following pairings: a partner made of metal-ceramic composite (MCC) and a partner made of MCC, carbon, Al₂O₃, SSiC, hard metal (HM), ZTA (Al₂O₃ and ZrO₂) or plastic (optionally fibre-reinforced).

5. Sliding friction pairings according to Claim 4 as a rotating mechanical seal in cooling water pumps, **characterized by** the following material pairings: MCC/carbon, MCC/Al₂O₃, MCC/SSiC, MCC/MCC, MCC/HM (hard metal), MCC/ZTA (Al₂O₃ and ZrO₂).

6. Sliding friction pairings according to Claim 4 as a rotating mechanical seal in dishwashing machines, **characterized by** the following material pairings: MCC/carbon, MCC/Al₂O₃, MCC/SSiC, MCC/MCC, MCC/HM, MCC/plastic (optionally fibre-reinforced).

7. Sliding friction pairings according to Claim 4 as a rotating mechanical seal for direct petrol injection, **characterized by** the following material pairings: MCC/carbon, MCC/SSiC, MCC/Al₂O₃, MCC/MCC, MCC/HM, MCC/ZTA.

8. Sliding friction pairings according to Claim 4 as a rotating mechanical seal in CO₂ compressors, **characterized by** the following material pairings: MCC/SSiC, MCC/Al₂O₃, MCC/MCC, MCC/HM, MCC/ZTA.

9. Sliding friction pairings based on the metal-ceramic composites according to Claim 1 or 2 between braking, bearing, sealing or driving components, for example in lifts, escalators, cranes and dry clutches, in pumps and compressors in pistons and cylinders, swash plates, radial bearings or axial bearings, in bearings of grinding cylinders and in sliding partners for rotary shaft seals.

10. Sliding friction pairings based on the metal-ceramic composites according to Claim 1 or 2 in lubricant-free fields of application, such as in the pharmaceutical and cosmetics industry or in food technology.

11. Sliding friction pairings based on the metal-ceramic composites according to Claim 1 or 2 in fittings used in the hygiene sector or in industry.

12. Sliding friction pairings based on the metal-ceramic composites according to Claim 1 or 2 in side plates in petrol pumps or power-assisted steering pumps.

13. Sliding friction pairings based on the metal-ceramic composites according to Claim 1 or 2 in rollers and/or bearing components in combustion engines, compressors or exhaust flaps.

14. Sliding friction pairings based on the metal-ceramic composites according to Claim 1 or 2 in valve pinions in diesel engines.

## Revendications

1. Matériaux composites de métal et céramique pour applications de frottement-glissement, **caractérisés par** des compositions de base comprenant une proportion de 30 à 75 % en volume d'une ou de plusieurs phases métalliques constituées, de préférence, d'aluminium et d'alliages d'aluminium, et une proportion de 25 à 70 % en volume d'un ou de plusieurs composants minéraux non métalliques tels que des matériaux céramiques, de préférence, des oxydes de titane, des silicates ou des oxydes d'aluminium, et dont la composition comporte 40 à 60 % en volume de Al₂O₃, la conductibilité thermique est supérieure à 50 W/mK, la résistance à la flexion vaut environ 300 MPa et le module d'élasticité vaut environ 160 GPa, ou dont la composition comporte 60 à 75 % en volume de SiC, la conductibilité thermique vaut au moins 180 W/mK, la résistance à la flexion vaut environ 300 MPa et le module d'élasticité vaut environ 200 GPa.

2. Matériaux composites de métal et céramique selon la revendication 1, **caractérisés en ce que** les surfaces placées en contact avec un partenaire de frottement-glissement présentent une rugosité Ra dont la valeur est inférieure à 1 µm.

3. Anneau de glissement fabriqué à partir d'un des matériaux composites de métal et céramique selon l'une des revendications 1 ou 2.

4. Accouplements à glissement-friction à base de matériaux composites de métal et céramique selon l'une des revendications 1 ou 2 ou d'un anneau de glissement selon la revendication 3, **caractérisés en ce que** les couples suivants sont constitués par un partenaire en matériau composite de métal et céramique (CMeC) et un partenaire en CMeC ou en charbon ou en Al₂O₃ ou en SSiC ou en métal dur (MD) ou en ZTA (Al₂O₃ et ZrO₂) ou en matière plastique éventuellement renforcée par des fibres.

5. Accouplements à glissement-friction faisant office de garniture étanche à anneau glissant dans des pompes à eau de refroidissement selon la revendication 4, **caractérisés par** les couples de matériaux suivants : CMeC/charbon, CMeC/Al₂O₃, CMeC/SSiC, CMeC/CMeC, CMeC/MD (métal dur), CMeC/ZTA (Al₂O₃ + ZrO₂).

6. Accouplements à glissement-friction faisant office de garniture étanche à anneau glissant dans des lave-vaisselle selon la revendication 4, **caractérisés par** les couples de matériaux suivants : CMeC/charbon, CMeC/Al₂O₃, CMeC/SSiC, CMeC/CMeC, CMeC/MD, CMeC/matière plastique éventuellement renforcée par des fibres.

7. Accouplements à glissement-friction faisant office de garniture étanche à anneau glissant pour systèmes d'injection directe d'essence selon la revendication 4, **caractérisés par** les couples de matériaux suivants : CMeC/charbon, CMeC/SSiC, CMeC/Al₂O₃, CMeC/CMeC, CMeC/MD, CMeC/ZTA.

8. Accouplements à glissement-friction faisant office de garniture étanche à anneau glissant dans des compresseurs de CO₂ selon la revendication 4, **caractérisés par** les couples de matériaux suivants : CMeC/SSiC, CMeC/Al₂O₃, CMeC/CMeC, CMeC/MD, CMeC/ZTA.

9. Accouplements à glissement-friction à base de matériaux composites de métal et céramique selon l'une des revendications 1 ou 2, placés entre des organes de freinage, de support, d'étanchéité ou d'entraînement, par exemple, dans des ascenseurs, des escaliers roulants, des grues, des embrayages secs, dans des pompes et des compresseurs sur les pistons et les cylindres, les plateaux oscillants, les paliers de roulement ou les paliers de butée, sur des paliers de cylindres broyeurs et sur des partenaires de glissement pour bagues d'étanchéité à lèvres avec ressort.

10. Accouplements à glissement-friction à base de matériaux composites de métal et céramique selon l'une des revendications 1 ou 2, dans des domaines d'utilisation exempts de matières lubrifiantes, comme dans l'industrie pharmaceutique et l'industrie cosmétique ou dans la technologie agro-alimentaire.

11. Accouplements à glissement-friction à base de matériaux composites de métal et céramique selon l'une des revendications 1 ou 2, dans des accessoires de tuyauterie du domaine sanitaire ou de l'industrie.

12. Accouplements à glissement-friction à base de matériaux composites de métal et céramique selon l'une des revendications 1 ou 2, sur des platines latérales de pompes à essence ou de pompes de direction assistée.

13. Accouplements à glissement-friction à base de matériaux composites de métal et céramique selon l'une des revendications 1 ou 2, sur des rouleaux et/ou des organes supports dans des moteurs thermiques ou des compresseurs, ou sur des volets d'échappement de gaz.

14. Accouplements à glissement-friction à base de matériaux composites de métal et céramique selon l'une des revendications 1 ou 2, sur des entraînements de soupapes dans des moteurs Diesel.
